# EUROPÄISCHE PATENTSCHRIFT

(11) **EP 3 416 906 B1**
(45) Veröffentlichungstag und Bekanntmachung des Hinweises auf die Patenterteilung: **17.07.2024**
(21) Anmeldenummer: 17707759.1
(22) Anmeldetag: 06.02.2017
(51) Int. Cl.: B32B 41/00, B65H 27/00, D21F 3/08

(54) **VERBUNDWALZE MIT KAVITÄT**
COMPOSITE ROLLER WITH CAVITY
CYLINDRE COMPOSITE DOTÉ D'UNE CAVITÉ

(30) Priorität: 15.02.2016 DE 102016102567
(43) Veröffentlichungstag der Anmeldung: 26.12.2018
(73) Patentinhaber: Ahauser Gummiwalzen Lammers GmbH & Co.KG, 48683 Ahaus (DE)
(72) Erfinder: KOSUBEK, Robert, 46514 Schermbeck (DE)
(74) Vertreter: Steffen, Andreas
(86) Internationale Anmeldenummer: PCT/EP2017/000161
(87) Internationale Veröffentlichungsnummer: WO 2017/140413

(56) Entgegenhaltungen:
- DE-A1- 19 812 723
- US-A1- 2007 079 492
- US-A1- 2013 084 423

## Beschreibung

Die vorliegende Erfindung betrifft die Verwendung einer Verbundwalze als Teil einer Anlage zur kontinuierlichen Herstellung einer Folien- oder Verbundbahn aus Papier-, Kunststoff- und Metalllagen, welche zumindest abschnittsweise Löcher mit einer als Sperrschicht ausgestalteten Metalllage umfasst, in Form eines PLH-Mehrfachlaminats in Form von PLH-Produkten (Pin Hole Produkte) für den Lebensmittelbereich, wobei die Verbundwalze zum Andrücken, Beschichten oder Kaschieren oder Laminieren der Folien- oder Verbundbahn dient, und die Verbundwalze :
- einen metallenen Kern ,
- und wenigstens einen zweischichtigen Walzenbezug mit einer ersten Schicht, die in walzenaxialer Richtung und radial umlaufend an den metallenen Kern anschließt, und mit einer zweiten Schicht, die in walzenaxialer Richtung und radial umlaufend auf der ersten Schicht aufgebaut ist, und mit zumindest einer Mantelfläche, die im Betriebszustand die Folien- oder Verbundbahn kontaktiert,
umfasst, und wobei zumindest abschnittsweise in walzenaxialer Richtung und zumindest abschnittsweise in Umlaufrichtung der Verbundwalze in der Mantelfläche des Walzenbezugs wenigstens eine Kavität derart ausgestaltet ist, dass im Betriebszustand ein zwischen der Folien- oder Verbundbahn und der Mantelfläche geführtes Fluid von der Kavität aufgenommen werden kann und/oder über die Kavität abgeleitet werden kann.

Eine gattungsbildende Verbundwalze ist beispielsweise aus der DE 196 45 696 C1 und der DE102014107048 A1 der Anmelderin bekannt, auf dessen Offenbarungsgehalt mit der vorliegenden Anmeldung vollumfänglich zurückgegriffen wird.

Aus der US2007/0079492 A1 ist eine Presswalze mit Durchgangslöchern bekannt, die sich von der Mantelfläche bis in den metallenen Kern der Walze erstrecken und fluidtechnisch mit dem Kern verbunden sind. Der Kern der Presswalze steht unter Unterdruck, wodurch bei Verwendung der Presswalze die zwischen einer Verpackungsbahn und der Walze eingeführte Luft abgesaugt werden kann. Die Durchgangslöcher dienen zudem als zusätzlicher Ausdehnungsraum für Deformationsabschnitte der bekannten Presswalze

Die US2013/0084423 A1 betrifft eine Presswalze mit einer Vielzahl von Rillen oder Einschnitten, die entlang derer axialen Erstreckung beabstandet zueinander angeordnet sind.

Schließlich betrifft die DE 198 12 723 A1 eine Rollenwickelwalze mit einer elastischen Oberflächenschicht auf einem Kern, in deren Oberfläche Öffnungen angeordnet sind. Bei der bekannten Rollenwickelwalze steht jede Öffnung über einen Kanal mit einem Luftaufnahmevolumen in Verbindung, das zumindest in Umfangsrichtung der Walze abgeschlossen ist. Das über den Kanal mit der Öffnung in Verbindung stehende Luftaufnahmevolumen weist vorzugsweise ein vorbestimmtes Volumina in Form eines Ausweichraumes auf, der über den Kanal mit Luft gefüllt wird. Wenn die Materialbahn von der Wickelwalze abgehoben wird, kann die in den Ausweichraum hineingedrückte Luft wieder entweichen.

Die bekannten Verbundwalzen sind insbesondere dazu geeignet sog. PLH-Produkte (Pin Hole Produkte) zu fahren. Die PLH-Produkte sind Mehrfachlaminate, bei denen als Sperrschicht sehr dünnes Aluminium zum Einsatz kommt, welches ein Loch (Pin Hole) verschließt.

Nachteilhaft bei den bekannten Verbundwalzen und dem unter Verwendung dieser Walzen durchgeführten Herstellungsprozess von Mehrfachlaminaten ist, dass im Prozess, wobei wie beispielsweise in der DE102014107048 A1 dargestellt, die Verbundwalze mit einer weiteren Walze gegeneinander läuft, über die Walzen laufende Bahnen in einer ersten Station, beispielsweise mittels einem zwischen die Bahnen über einen Extruder geführten Beschichtungsmedium wie Polyethylen (PE) oder Kleber, miteinander zu einem Laminat kaschiert bzw. verklebt werden. Ab einer Liniengeschwindigkeit von ca. 300 m/min kommt es dabei durch eingezogene Luft wie folgt zu Problemen. Dabei wird davon ausgegangenen, dass das Aluminium bereits mit dem Karton verbunden ist und eine weitere Schicht, z.B. eine bedruckte Folie in einer nächsten Station auf die Gegenseite erneut mit flüssigem PE (Polyethylen) kaschiert wird. Durch das erneute Aufbringen einer weiteren Kaschierung schmilzt das bereits vorhandene PE leicht an. Dabei bildet der Luft bei der genannten Linienoder Betriebsgeschwindigkeit von ca. 300 m/min eine Art Bugwelle vor dem zwischen den gegeneinander laufenden Walzen gebildeten Walzenspalt. Dieser Effekt tritt bereits bei einer Liniengeschwindigkeit in einem Bereich von ca. 200 m/min bis 250 m/min auf, wobei die mitgeführte Luft eingezogen wird, sich die Luft durchdrückt und das sehr dünne Aluminium derart beschädigt, dass Sauerstoff und damit Kontamination in den Verbund eindringen kann. Dadurch ist eine Lebensmittelfähigkeit des PLH-Mehrfachlaminats nicht mehr gegeben. Das ist ein Grund weshalb die Produktionskosten für die Mehrfachlaminate rasant ansteigen können, da durch das beschädigte Aluminium die beschädigten Laminate nicht mehr verwendet werden können.

Es ist daher die Aufgabe der vorliegenden Erfindung eine Verbundwalze zu verwenden, mit der die im Stand der Technik bekannten Nachteile zumindest teilweise überwunden werden können. Insbesondere ist es die Aufgabe der vorliegenden Erfindung eine Verbundwalze derart zu verwenden, dass eine Beschädigung der Aluminiumschicht und die damit eihergehende Kontamination des Mehrfachlaminats verhindert werden kann. Darüber hinaus ist es die Aufgabe der vorliegenden Erfindung die Produktionskosten zur Herstellung des Mehrfachlaminats zu verringern.

Die voranstehende Aufgabe wird durch die Verwendung einer Verbundwalze mit den Merkmalen des Anspruchs 1 gelöst. Weitere Vorteile, Merkmale und Details der Erfindung ergeben sich aus den Unteransprüchen, der Beschreibung und den Zeichnungen. Dabei gelten Merkmale und Details, die im Zusammenhang mit der erfindungsgemäßen Verbundwalze beschrieben sind, selbstverständlich auch im Zusammenhang mit der erfindungsgemäßen Verwendung der Verbundwalze und darüber hinaus in Verbindung mit dem als einen weiteren Aspekt in der Beschreibung offenbarten Herstellungsverfahren der erfindungsgemäß verwendeten Verbundwalze, so dass bezüglich der Offenbarung zu den einzelnen Erfindungsaspekten stets wechselseitig Bezug genommen wird bzw. werden kann.

Die erfindungsgemäße Verwendung einer Verbundwalze als Teil einer Anlage zur kontinuierlichen Herstellung einer Folien- oder Verbundbahn aus Papier-, Kunststoff- und Metalllagen, welche zumindest abschnittsweise Löcher mit einer als Sperrschicht ausgestalteten Metalllage umfasst, in Form eines PLH-Mehrfachlaminats in Form von PLH-Produkten (Pin Hole Produkte) für den Lebensmittelbereich, wobei die Verbundwalze zum Andrücken, Beschichten oder Kaschieren oder Laminieren der Folien- oder Verbundbahn dient, und die Verbundwalze :
- einen metallenen Kern ,
- und wenigstens einen zweischichtigen Walzenbezug mit einer ersten Schicht, die in walzenaxialer Richtung und radial umlaufend an den metallenen Kern anschließt, und mit einer zweiten Schicht, die in walzenaxialer Richtung und radial umlaufend auf der ersten Schicht aufgebaut ist, und mit zumindest einer Mantelfläche, die im Betriebszustand die Folien- oder Verbundbahn kontaktiert, umfasst, und wobei zumindest abschnittsweise in walzenaxialer Richtung und zumindest abschnittsweise in Umlaufrichtung der Verbundwalze in der Mantelfläche des Walzenbezugs wenigstens eine Kavität derart ausgestaltet ist, dass im Betriebszustand ein zwischen der Folien- oder Verbundbahn und der Mantelfläche geführtes Fluid von der Kavität aufgenommen werden kann und/oder über die Kavität abgeleitet werden kann, schließt die technische Lehre ein, dass die Kavität in Form von mehreren in Umlaufrichtung der Verbundwalze orientierten und zumindest in Umlaufrichtung zueinander beabstandeten Einzellöchern ausgebildet ist, wobei die Einzellöcher als Sacklöcher ausgestaltet sind, die in der Mantelfläche des Walzenbezugs angeordnet sind und sich von der Mantelfläche über die erste Schicht in die zweite Schicht des Walzenbezuges erstrecken, und dass die Kavität in Abschnitten der Mantelfläche (30) angeordnet ist, welche mit der Metalllage der Verbundbahn in Form des PLH-Mehrfachlaminats kontaktieren, wobei das Fluid derart über die Kavität abgeleitet wird, dass ein Durchdrücken der Metalllage durch sich zwischen der Mantelfläche und der Verbundbahn eingezogenes Fluid wirkungsvoll verhindert werden kann.

Die Folien- oder Verbundbahn aus Papier-, Textil-, Kunststoff- und/oder Metalllagen für den Lebensmittelbereich dient vorteilhaft zur Herstellung eines PLH-Mehrfachlaminats, bei dem zumindest eine Metalllage vorteilhaft aus Aluminium ausgebildet ist, wobei die Metalllage als Sperrschicht zum Verschließen eines Loches (Pin Hole) dient.

Als "Betriebszustand" wird der Herstellungsprozess eines Mehrfachlaminats verstanden, wobei die Bahnen für das Mehrfachlaminat mit einer bestimmten Liniengeschwindigkeit über die Walzen bzw. zwischen den sich gegeneinander drehenden Walzen geführt werden.

Als ein zwischen der Folien- oder Verbundbahn und der Mantelfläche "geführtes Fluid" soll insbesondere Luft verstanden werden, die im Betriebszustand von den Bahnen, welche zu einem Mehrfachlaminat verbunden werden, mitgeführt oder zwischen die Walzen und die Bahnen eingezogen wird. Das Fluid kann auch Sauerstoff, eine Flüssigkeit ein Flüssigkeitsgemisch oder ein anderes Gas oder Gasgemisch als Sauerstoff oder Luft sein.

Durch die Ausgestaltung zumindest einer abschnittsweise in Umlaufrichtung der Verbundwalze in der Mantelfläche des Walzenbezugs ausgestalteten Kavität, die vorteilhaft in den Abschnitten der Mantelfläche angeordnet sind, welche mit der Metalllage der Verbundbahn und hier insbesondere mit "Pin holes" einer PLH-Mehrfachlaminats kontaktieren, kann das im

Betriebszustand eingezogene Fluid, insbesondere Luft, über die Kavität ausweichen.

Beispielsweise kann die Luft bei Kontakt der Mantelfläche mit der Bahn von der Kavität aufgenommen und während die Kavität oder Abschnitte der Kavität außer Kontakt mit der Bahn sind in Umlaufrichtung der Verbundwalze wieder aus der Kavität abgegeben werden. In Alleinstellung oder ergänzend zu der Aufnahme und Abgabe des Fluids über die Kavität, kann das Fluid über die Kavität abgeleitet werden, d. h. über die Kavität ausweichen, so dass ein Durchdrücken der Metalllage durch sich zwischen der Mantelfläche und der Bahn eingezogene Luft wirkungsvoll verhindert werden kann. Dadurch, dass das Fluid von der Kavität aufgenommen bzw. über die Kavität ausweichen kann, wird daher zum einen verhindert, dass das eingezogene Fluid sich bei Kontaktierung der Metalllage mit der Walze durch die Metalllage durchdrückt und dabei die Metalllage zerstört. Zum anderen lässt sich vorteilhaft die Liniengeschwindigkeit bei verbesserten Ergebnissen im Sauerstofftest, mit dem Lufteinlass bei einer beschädigten Metalllage getestet werden kann, bei Fehlerfreiheit des Mehrfachlaminats auf ca. 450m/min Liniengeschwindigkeit anheben. Das bedeutet eine Verringerung der Produktionskosten, nämlich insbesondere eine Halbierung der Kosten, was ausgehend von einem Stundensatz der gesamten Anlage von ca. 3000E die Herstellungskosten für ein PLH-Mehrfachlaminat drastisch reduziert.

Vorzugsweise lässt sich die Kavität in der Mantelfläche des Walzenbezuges und maximal durch den Walzenbezug bis hin zum metallenen Kern der Verbundwalze durch Bohren, Lasern, Fräsen oder durch Formgebung bei der Herstellung der erfindungsgemäß verwendeten

Verbundwalze ausgestalten. Beispielsweise kann beim Vulkanisieren des Walzenbezuges auf den metallenen Kern der Verbundwalze in das Material des Walzenbezuges eine Form in der Art eines Stachelhalsbandes eingelegt werden, welches die Walze zumindest in Umlaufrichtung umschließt, und dessen Stacheln in dem Walzenbezug radial zur walzenaxialen Richtung zum metallenen Kern der Verbundwalze hin ausgerichtet sind. Nach Entfernen des Stachelhalsbandes bilden die durch Stacheln in dem Walzenbezug erzeugten Hohlräume die Kavität.

Um unterschiedlichen Ansprüchen an die Verbundwalze gerecht zu werden, weist die Kavität vorteilhaft eine variable radiale Tiefe und/oder eine variable axiale Weite auf. Die maximale radiale Tiefe der Kavität ist abhängig von der Schichtdicke des Walzenbezuges mit der davon umfassten Mantelfläche. Der den Kern direkt umgebende Walzenbezug (bei einem ein- oder mehrschichtigen Aufbau) kann bei einer Shore-A-Härte von 60 bis 95 eine Materialschicht, d. h. eine Materialdicke zwischen 4 mm und 40 mm, bevorzugt zwischen 5 mm und 25 mm, insbesondere bevorzugt zwischen 15 mm und 30 mm aufweisen. Demzufolge kann die Tiefe der Kavität zwischen 4 mm und 40 mm, bevorzugt zwischen 5 mm und 25 mm und bevorzugter zwischen 15 mm und 30 mm betragen. Die axiale Weite der Kavität kann zwischen 0,5 mm bis 8 mm variieren. Bevorzugt beträgt die axiale Weite der Kavität 1,5 mm bis 5 mm und noch bevorzugter 2,5 mm bis 3,5 mm. Dabei kann die radiale Tiefe der Kavität in Relation zu der axialen Weite der Kavität stehen, wobei vorteilhaft zwischen dem Volumen der Kavität und der Stabilität der Kavität abzuwägen ist.

In vorteilhafter Weise erstreckt sich die Kavität zumindest abschnittsweise in dem Walzenbezug, der die Mantelfläche umfasst, radial hin zu der walzenaxialen Mitte der Verbundwalze. Da der metallene Kern der erfindungsgemäß verwendeten Verbundwalze und damit die walzenaxiale Mitte vorteilhaft gekühlt ist, kann durch die sich zumindest abschnittsweise radial hin zu dem gekühlten metallenen Kern hin erstreckende Kavität Kühlung durch den den gekühlten Kern umgebenden Walzenbezug über die von dem Walzenbezug umfasste Mantelfläche an die die Mantelfläche kontaktierende Folien- oder Verbundbahn abgegeben werden. Dabei bedeutet "zumindest abschnittsweise radial" auch, dass die Kavität nur in einem Abschnitt radial zur walzenaxialen Mitte ausgerichtet ist. Durch Variation der radialen Tiefe der Kavität kann somit bevorzugt die abgegebene Kühlleistung über die verbleibende Materialstärke bzw. Schichtdicke des Walzenbezuges, welche zwischen dem gekühlten metallenen Kern und dem zum Kern hin gerichteten Ende der Kavität liegt, aktiv gesteuert werden. Dadurch kann unter anderem vorteilhaft eine Kondensation des Fluids, insbesondere der Luft, bei Kontaktierung der Bahn mit der Mantelfläche der Verbundwalze verhindert werden.

Um eine besonders gute Kühlung von dem metallenen Kern über die Kavität bis an die Folienoder Verbundbahn zu erreichen, ist es vorteilhaft die Kavität bis zum metallenen Kern durchgehend in dem Walzenbezug auszugestalten, so dass die Mantelfläche des Walzenbezuges in direktem Kontakt über die Kavität mit dem metallenen Kern steht. Dadurch kann eine maximale Kühlleistung gesteuert zumindest in den Bereich der die Löcher als Sperrschicht abdeckenden Metalllage der Folien- oder Verbundbahn erreicht werden. Durch die von dem metallenen Kern über die Kavität und über die Mantelfläche des Walzenbezuges abgegebene Kühlung kann die im Betriebszustand eingezogene warme Luft sich durch die plötzliche Abkühlung zusammenziehen, wodurch der Effekt des Ableitens, d. h des Ausweichens des eingezogenen Fluids, insbesondere der eingezogenen Luft, über die Kavität noch gesteigert wird.

Um beispielsweise die Stabilität der Kavität über deren gesamten radialen Tiefe zu gewährleisten und um dabei beispielsweise in der Mantelfläche eine große axiale Weite der Kavität zu erzielen, wobei insgesamt die Stabilität der Kavität nicht beeinträchtigt sein soll, ist es vorteilhaft, dass die axiale Weite der Kavität in dem Walzenbezug sich von der Mantelfläche in Richtung zu der walzenaxialen Mitte der Verbundwalze verkleinert. Entsprechend kann beispielsweise die Kavität in der Mantelfläche eine axiale Weite von 8 mm aufweisen und sich beispielsweise bis zum metallenen Kern hin bis beispielsweise auf 0,5 mm entweder kontinuierlich oder stufenweise verjüngen. Insbesondere dann, wenn die Mantelfläche des Walzenbezuges und der Walzenbezug zwei Schichten bilden, die aufgrund ihrer Materialeigenschaften unterschiedliche Härten aufweisen, kann es vorteilhaft sein, dass bei Ausgestaltung der unter der Mantelfläche liegenden Schicht aus einem weicheren Material als das der Mantelfläche, die axiale Weite der Kavität in der unter der Mantelfläche liegenden Schicht in Relation zu der axialen Weite der Kavität in der Mantelfläche verringert ist, um die Stabilität der Kavität auch in der weicheren Schicht zu gewährleiten. Es ist auch denkbar, dass sich die axiale Weite der Kavität von der Mantelfläche beispielsweise bis zur Mitte der Materialschicht des Walzenbezuges verjüngt und von der Mitte der Materialschicht des Walzenbezuges bis hin zum metallen Kern der Verbundwalze wieder erweitert. Diese Ausgestaltung der Kavität kann in Abhängigkeit von mehreren übereinander gelagerten Schichten des Walzenbezuges mit unterschiedlichen Materialeigenschaften erfolgen.

Darüber hinaus können durch diese Ausgestaltung der Kavität vorteilhaft Strömungseffekte in der Kavität erzeugt werden, die ein Ausweichen des im Betriebszustand eingezogenen Fluids, insbesondere der eingezogenen Luft, noch steigern.

In vorteilhafter Weise sind in walzenaxialer Richtung beabstandet zueinander zumindest zwei Kavitäten angeordnet. In besonders bevorzugter Weise bilden zumindest zwei oder mehr beabstandet zueinander ausgestaltete Kavitäten den Bereich zum Ableiten bzw. zum Ausweichen oder der Aufnahme des im Betriebszustand eingezogenen Fluids. Die Kavitäten können dabei in direkter Nachbarschaft, d. h. in nur einem geringen Abstand voneinander ausgebildet sein, wobei der Abstand der benachbarten Kavitäten bevorzugt zwischen 0,5 mm und 6 mm und noch bevorzugter zwischen 2 mm und 4 mm liegt. Die Kavitäten können aber auch in einem großen Abstand in walzenaxialer Richtung zueinander beabstandet sein, wobei der Abstand der benachbarten Kavitäten zwischen 10 cm und 3 m liegen kann. In bevorzugter Weise sind die benachbarten Kavitäten radial umlaufend und in walzenaxialer Richtung parallel zueinander angeordnet. Vorzugsweise sind dabei die Kavitäten in walzenaxialer Richtung im Bereich der in dem PLH-Mehrfachlaminat parallel ausgebildeten "Pin holes" angeordnet.

Besonders bevorzugt sind zumindest zwei oder bevorzugt drei in direkter Nachbarschaft liegende Kavitäten in axialer Richtung beabstandet zu zumindest zwei oder bevorzugt drei in direkter Nachbarschaft liegenden Kavitäten und je nach axialer Länge der Verbundwalze zu weiteren zwei oder bevorzugt drei in direkter Nachbarschaft liegenden Kavitäten mit einem großen Abstand in walzenaxialer Richtung zueinander beabstandet in zumindest der Mantelfläche des Walzenbezuges ausgestaltet, so dass zumindest ein PLH-Mehrfachlaminat unter Abführung des Fluids, insbesondere Luft, über die Verbundwalze geführt werden kann, welches zwei oder mehr parallel zueinander ausgestaltete Reihen an "Pin holes" aufweist.

Erfindungsgemäß ist die Kavität in Form von mehreren in Umlaufrichtung der Verbundwalze orientierten und zumindest in Umlaufrichtung zueinander beabstandeten Einzellöchern ausgebildet. Bei Ausgestaltung von zwei oder mehr Kavitäten in zumindest der Mantelfläche des Walzenbezuges sind die Kavitäten als in Reihe in Umlaufrichtung umlaufende und zueinander in Umlaufrichtung beabstandete Löcher ausgestaltet, die in walzenaxialer Richtung parallel zu zumindest einer weiteren als in Reihe in Umlaufrichtung umlaufende und zueinander beabstandete Einzellöcher ausgestaltet ist. Vorteilhaft sind dabei die die Kavitäten bildenden Reihen der Einzellöcher in walzenaxialer Richtung parallel zueinander angeordnet. Es ist auch die Ausgestaltung der Kavität als in Umlaufrichtung spiralförmig oder diagonal zur walzenaxialen Richtung liegende bzw. umlaufende Reihe von Einzellöchern denkbar, wobei durch die spiralförmige oder zur walzenaxialen Richtung diagonalen Anordnung der Einzellöcher relativ zu den "Pin holes" ein größerer Überdeckungsbereich zwischen der Kavität und den "Pin holes" erzeugt wird.

Die Einzellöcher sind erfindungsgemäß als Sacklöcher ausgestaltet, die sich von der Mantelfläche bis in den Walzenbezug erstrecken. Alternativ, jedoch nicht unter den Schutzumfang der Ansprüche fallend, können sie als Durchgänge ausgestaltet sein, die sich von der Mantelfläche über den Walzenbezug bis hin zu dem metallenen Kern erstrecken. Die Einzellöcher können vorteilhaft stufenartig oder sich kontinuierlich verjüngend von der Mantelfläche zum metallenen Kern hin ausgestaltet sein, wobei der Durchmesser der Einzellöcher in der Mantelfläche größer ist als der Durchmesser der Einzellöcher in Richtung des metallenen Kerns. Ganz allgemein kann die als Einzellöcher ausgestaltete Kavität eine variable radiale Tiefe und/oder variable axiale Weite aufweisen, was bedeutet, dass die Einzellöcher als solche eine variable radiale Tiefe und/oder variable axiale Weite aufweisen können, wobei die Einzellöcher auch innerhalb einer Kavität unterschiedliche radiale Tiefen und/oder unterschiedliche axiale Weiten aufweisen können.

Vorzugsweise kann die Kavität, bevorzugt die Einzellöcher der Kavität, durch Bohren, Lasern, Fräsen oder durch Formgebung während des Herstellungsprozesses der Verbundwalze ausgebildet werden. Die Kavität, bevorzugt die Einzellöcher, können durch Anfasen, Ovalität, unterschiedliche Größe und/oder der Anzahl der Einzellöcher innerhalb der Kavität eine axiale Weite zwischen 0,5 mm bis 8 mm aufweisen.

Die Einzellöcher können vorzugsweise in Form von Langlöchern ausgestaltet sein, die vorzugsweise bezogen auf deren Längsausdehnung radial in Umlaufrichtung orientiert beabstandet zueinander zumindest in der Mantelfläche ausgebildet sind. Durch Ausbildung von Einzellöchern als Langlöcher kann vorteilhaft das Volumen der Kavität bzw. die axiale Weite der Kavität zumindest in der Mantelfläche des Walzenbezuges erhöht werden.

Vorteilhaft sind die Einzellöcher einer Kavität relativ zu den Einzellöchern einer benachbarten Kavität in walzenaxialer Richtung versetzt zueinander angeordnet, wobei sich die Einzellöcher der einen Kavität zu den Einzellöcher der benachbarten Kavität in walzenaxialer Richtung vorteilhaft zwischen 5-90% bezogen auf deren Durchmesser, d. h. der axialen Weite der Einzellöcher, je nach Anwendungsfall axial überschneiden. Diese Ausgestaltung der benachbarten Kavitäten kann beispielsweise durch in Umlaufrichtung unterschiedliche Beabstandungen der Einzellöcher jeweils der Kavitäten und/oder durch einen sich axial und axial/radial wechselnden Durchmesser, d. h. einer axial und axial/radial wechselnden Weite der Einzellöcher erzielt werden. Die Kanten der Kavität, beispielsweise die Kanten der als Bohrungen ausgestalteten Einzellöcher können gerundet, scharfkantig oder angefast sein.

In vorteilhafter Weise kann zumindest in dem Abschnitt der Mantelfläche, in dem die Kavität ausgestaltet ist, eine zumindest abschnittweise in Umlaufrichtung und/oder zumindest abschnittsweise in walzenaxialer Richtung laufende Nut ausgebildet sein. Die Nut kann variabel in ihrer Tiefe, Breite und Form (V- förmig, etc.) ausgestaltet sein und ist vorzugsweise abhängig vom Designwunsch eines Kunden, da die im Herstellungsprozess erzeugten und auf dem Mehrfachlaminat hinterlassenen Abdrücke im Fertigprodukt des PLH-Mehrfachlaminats ein Wiedererkennungsmerkmal und Qualitätsmerkmal sind oder als solches definiert werden.

Vorzugsweise verbindet die Nut die Einzellöcher der in Form von Einzellöchern ausgestalteten Kavität in Umlaufrichtung miteinander. Es ist aber auch vorteilhaft, dass die Nut oder eine weitere Nut die Einzellöcher der in walzenaxialer Richtung beabstandet zueinander ausgestalteten Kavitäten sowohl in walzenaxialer Richtung als auch diagonal zu der walzenaxialen Richtung miteinander verbindet. Durch die Ausbildung zumindest einer die Einzellöcher verbindenden Nut kann ein Ausweichen des im Betriebszustand eingezogenen Fluids, insbesondere der eingezogenen Luft, noch gesteigert werden.

Vorteilhaft ist zumindest der Abschnitt der Mantelfläche, in dem die Kavität ausgestaltet ist, derart materialtechnisch ausgestaltet ist und/oder weist eine Oberflächenstruktur, dass das Aufnehmen des Fluids durch die Kavität und/oder das Ableiten des Fluids über die Kavität unterstützt wird. Dabei ist es denkbar, dass im Bereich der Kavität, welcher sich zumindest abschnittsweise mit dem Bereich der Pin Holes überdeckt, ein weicheres Material oder eine weichere Materialmischung bezogen auf die Materialeigenschaft der Mantelfläche zumindest abschnittsweise in der Mantelfläche des Walzenbezuges partiell eingebracht bzw. zumindest die Mantelfläche im Bereich der Kavität aus einem weicheren Material oder einer Materialmischung ausgestaltet ist, um im Betriebszustand die Metalllage, insbesondere das Aluminium im Bereich der Kartonränder der Folien- oder Verbundbahn zu schonen. Eine Ausbildung der Mantelfläche im Bereich der Kavität aus einem härteren Material oder einer härteren Materialmischung als die restliche funktionale Oberfläche der Mantelfläche kann vorteilhaft zur Stabilisationserhöhung der Kavität eingesetzt werden.

Die Oberfläche kann je nach Bedarf vorteilhaft strukturiert sein, wobei vorzugsweise ein spezielles, rauhes Material (Compound) oder eine Materialmischung wie beispielsweise ein CSM-, CPE-, ECO-, HNBR-, EPDM- Polymer oder eine Mischung aus mindestens zwei dieser Polymere zumindest abschnittsweise derart in die Mantelfläche einvulkanisiert ist, dass eine Rauigkeit von ca. 20 my bis ca. 300 my erzeugt wird, wodurch ein Ausweichen des im Betriebszustand eingezogenen Fluids, insbesondere der eingezogenen Luft, zusätzlich zu der Kavität und optional zu der Nut bei Pressung der Verbundwalze gegen die Warenbahn, d. h. bei Pressung der Verbundwalze gegen die Folien- oder Verbundbahn noch gesteigert werden kann.

In vorteilhafter Weise kann der Walzenbezug radial zu der walzenaxialen Mitte der Verbundwalze und/oder in der walzenaxialen Richtung zumindest abschnittsweise aus einem Polymer ausgestaltet ist. Dabei kann der Walzenbezug, der die Mantelfläche umfasst, als eine Schicht mit der Mantelfläche und aus dem gleichen Polymer wie die Mantelfläche ausgebildet sein. Die Mantelfläche und der Walzenbezug können aber auch zwei oder mehr radial um die walzenaxiale Mitte angeordnete, d. h. um den metallenen Kern der Verbundwalze ausgebildete Schichten bilden, die radial zu der walzenaxialen Mitte der Verbundwalze übereinander angeordnet sind, und die aus unterschiedlichen Polymeren ausgebildet sind. Der Walzenbezug kann aber auch in Alleinstellung oder zusätzlich zu der ein- oder der mehrschichtigen Ausgestaltung des Walzenbezuges in walzenaxialer Richtung aus Abschnitten mit einem oder mit unterschiedlichen Polymeren ausgestaltet sein. Dabei können sich beispielsweise in walzenaxialer Richtung polymerfreie Abschnitte mit Abschnitten, die aus einem Polymer ausgestaltet sind, anschließen. Dabei liegen vorteilhaft die Abschnitte, die aus einem Polymer ausgestaltet sind, im Bereich der "pin holes" der über die Verbundwalze laufenden Folien- oder Verbundbahn, d. h. vorteilhaft im Bereich der Kavität. Als Polymer kann vorteilhaft ein kautschukartiges Homo- oder ein auf Mischpolymerisaten auf Basis von hydriertem Acrylnitrilbutadien-Kautschuk (HNBR) oder Epichlorhydrin (ECO) basierendes Polymer verwendet werden.

Ein weiterer Aspekt, nicht unter den Schutzumfang der Ansprüche fallend, ist ein Herstellungs- oder Fertigungsverfahren der verwendeten Verbundwalze. Dabei ist es vorstellbar, das in einem vorteilhaften Verfahrensschritt durch Einlegen einer Art Stachelhalsband beim Vulkanisieren des Walzenbezuges auf den metallenen Kern, die in dem Stachelhalsband ausgestalteten Stacheln formgebend für die Kavität sind.

Um hier Wiederholungen bezüglich der Vorteile der erfindungsgemäßen Verwendung der Verbundwalze und des Verfahrens zur Herstellung der Verbundwalze gemäß dem weiteren Aspekt zu vermeiden, wird auf die Beschreibung der vorteilhaften Ausgestaltung der Verbundwalze verwiesen, und es wird vollumfänglich auf diese zurückgegriffen.

Weitere, die Erfindung verbessernde Maßnahmen, werden nachstehend mit der Beschreibung von bevorzugten Ausführungsbeispielen der Erfindung anhand der Figuren näher dargestellt. Dabei können die in den Ansprüchen und in der Beschreibung erwähnten Merkmale jeweils einzeln für sich oder in beliebiger Kombination erfindungswesentlich sein. Dabei ist zu beachten, dass die in den Figuren dargestellten Ausführungsbeispiele nur beschreibenden Charakter haben und nicht dazu gedacht sind, die Erfindung in irgendeiner Form einzuschränken.

Es zeigen:
- Fig. 1: eine schematische Skizze einer Ausführungsform einer Verbundwalze in einer perspektivischen Detailansicht,
- Fig. 2: die Verbundwalze aus Figur 1 im Betriebszustand zur Herstellung eines PLH-Mehrfachlaminats
und
- Fig. 3: eine Schnittansicht in walzenaxialer Richtung einer Verbundwalze mit Detailansicht auf zwei Kavitäten.

In den unterschiedlichen Figuren sind gleiche Teile stets mit denselben Bezugszeichen versehen, weshalb diese in der Regel nur einmal beschrieben werden.

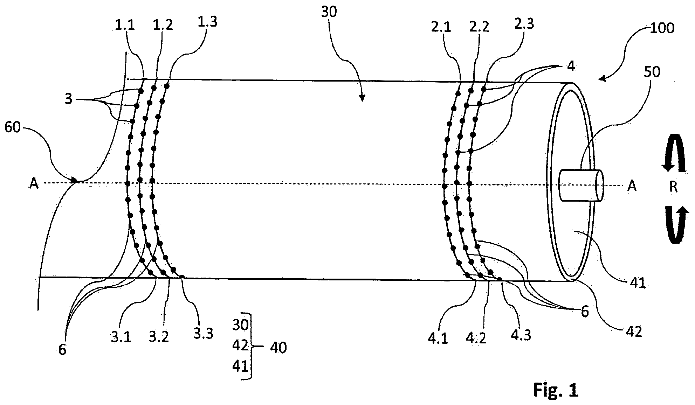

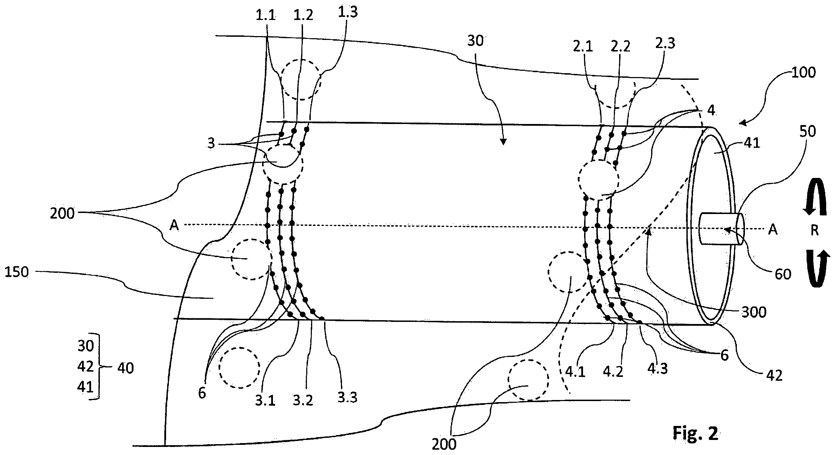

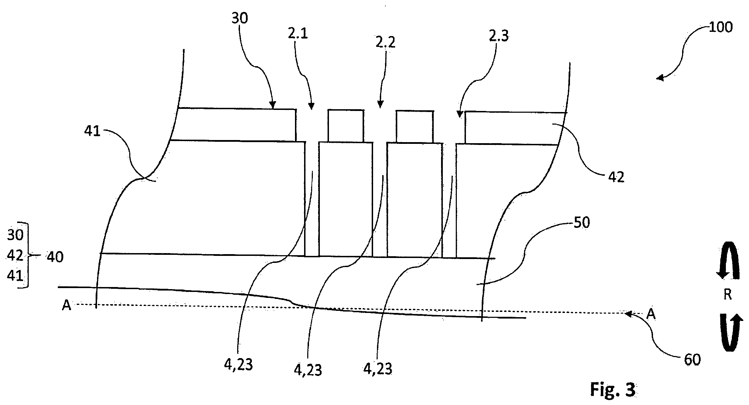

In Figur 1 zeigt eine Detailansicht einer Verbundwalze 100, die als Teil einer Anlage zur kontinuierlichen Herstellung einer Folien- oder Verbundbahn aus Papier-, Textil-, Kunststoffund/oder Metalllagen für den Lebensmittelbereich geeignet ist. Die Verbundwalze 100 umfasst einen metallenen Kern 50 und einen radial um den metallenen Kern 50 ausgebildeten Walzenbezug 40 mit einer Mantelfläche 30. Wie in der Figur 2 dargestellt, kontaktiert die Verbundwalze 50 mit der von dem Walzenbezug 40 umfassten Mantelfläche 30 im Betriebszustand eine Folien- oder Verbundbahn 150. Der Walzenbezug 40 ist um die walzenaxiale Mitte 60 der Verbundwalze 100, welche von dem metallenen Kern 50 umfasst ist, zweischichtig aufgebaut, wobei eine Schicht 41 in walzenaxialer Richtung AA und radial umlaufend an den metallenen Kern 50 anschließt. Eine zweite Schicht 42 des Walzenbezuges 40, die mit der Mantelfläche 30 abschließt, ist in walzenaxialer Richtung AA und radial umlaufend auf der Schicht 41 des Walzenbezuges 40 aufgebaut. Der Walzenbezug 40 kann aber entgegen der Darstellung in den Figuren nur einschichtig aber auch mehrschichtig, beispielsweise dreischichtig und mehr ausgestaltet sein. In walzenaxialer Richtung AA und zumindest abschnittsweise in Umlaufrichtung R der Verbundwalze 100 sind in der Mantelflächen 30 des Walzenbezugs 40 I in walzenaxialer Richtung beabstandet zueinander insgesamt sechs Kavitäten 1.1, 1.2, 1.3, 2.1, 2.2 und 2.3 angeordnet. Dabei bilden jeweils die drei Kavitäten 1.1, 1.2, 1.3 für sich und die drei Kavitäten 2.1, 2.2 und 2.3 für sich Kavitäten 1.1, 1.2, 1.3 und Kavitäten 2.1, 2.2 und 2.3, die in direkter Nachbarschaft, d. h. in nur einem geringen Abstand voneinander in walzenaxialer Richtung AA ausgebildet sind. Die Kavitäten 1.1, 1.2, 1.3 liegen in einem großen Abstand in walzenaxialer Richtung beabstandet zu den Kavitäten 2.1, 2.2 und 2.3. Die Kavitäten 1.1, 1.2, 1.3, 2.1, 2.2 und 2.3 sind, wie dargestellt radial umlaufend und in walzenaxialer Richtung AA parallel zueinander angeordnet. Vorliegend sind die Kavitäten 1.1, 1.2, 1.3, 2.1, 2.2 und 2.3 in Form von mehreren in Umlaufrichtung R der Verbundwalze 100 orientierten und zumindest in Umlaufrichtung R zueinander beabstandeten Einzellöchern 3 und 4 ausgebildet, welche als in Umlaufrichtung umlaufende Reihen 3.1, 3.2, 3.3, 4.1, 4.2, 4.3 ausgebildet sind. In walzenaxialer Richtung AA sind die Reihen 3.1, 3.2, 3.3, 4.1, 4.2, 4.3 parallel zueinander ausgestaltet. Die Einzellöcher 3 und 4 sind als Sacklöcher oder Durchgänge 5, wie in Figur 3 dargestellt, die sich von der Mantelfläche 30 über die Schicht 41 in die Schicht 42 des Walzenbezuges 40 erstrecken, ausgestaltet. Jedoch sind die Einzellöcher 3 und 4 bezüglich ihrer radialen Tiefe und/oder ihrer axiale Weite variabel. Die Löcher 3 und 4 jeweils der einzelnen Reihen 3.1, 3.2, 3.3, 4.1, 4.2, 4.3 sind jeweils durch eine radial umlaufende Nut 6 miteinander verbunden. Es ist aber auch denkbar, dass zumindest eine Nut 6 die in walzenaxialer Richtung beabstandet zueinander ausgestalteten Kavitäten 1.1, 1.2, 1.3 und 2.1, 2.2 und 2.3, und dabei insbesondere die Einzellöcher 3 und 4 zwischen den Reihen 3.1, 3.2, 3.3, 4.1, 4.2, 4.3 miteinander verbindet, beispielsweise diagonal zu der walzenaxialen Richtung AA miteinander verbindet. Durch die Ausbildung der die Einzellöcher 3 und 4 der Reihen 3.1, 3.2, 3.3, 4.1, 4.2, 4.3 verbindenden Nut 6 kann insgesamt ein Ausweichen des im Betriebszustand, siehe Figur 2, eingezogenen Fluids, insbesondere der eingezogenen Luft, noch gesteigert werden.

Figur 2 zeigt die Verbundwalze 100 aus der Figur 1 in einem Betriebszustand, d. h. bei der Herstellung eines Mehrfachlaminats aus einer Folien- oder Verbundbahn, das als PLH-Mehrfachlaminat 150 ausgebildet ist. In der Figur ist das PLH-Mehrfachlaminat 150 mit unterbrochenen Linien dargestellt, um die Ausrichtung der an der Unterseite 300 des PLH-Mehrfachlaminats 150 ausgebildeten "Pin holes" 200 über den Abschnitten der Mantelfläche 30 mit den Kavitäten 1.1, 1.2, 1.3 und 2.1, 2.2 und 2.3 darstellen zu können. Das PLH-Mehrfachlaminat 150 weist zumindest eine Metalllage auf, vorzugsweise Aluminium, welche als sehr dünne Sperrschicht die Löcher "Pin Holes" 200 verschließt.

Bei einer Linien- oder Betriebsgeschwindigkeit von ca. 300 m/min entsteht im Betriebszustand eine Art Bugwelle vor der Verbundwalze 100, üblicher Weise in einem zwischen den gegeneinander laufenden Walzen gebildeten Walzenspalt (nicht dargestellt). Dieser Effekt tritt bereits bei einer Liniengeschwindigkeit in einem Bereich von ca. 200 m/min bis 250 m/min auf, wobei die mitgeführte Luft eingezogen wird, sich die Luft durchdrückt und das die Sperrschicht der "Pin Holes" 200 derart beschädigt, dass Sauerstoff und damit Kontamination in den Verbund des PLH-Mehrfachlaminat 150 eindringen kann. Wie in der Figur 2 gezeigt überdecken die "Pin Holes" 200 zumindest abschnittsweise die Abschnitte der Mantelfläche 30 mit den zumindest darin ausgestalteten Kavitäten 1.1, 1.2, 1.3 und 2.1, 2.2 und 2.3 Dabei ist es nicht zwingend notwendig, dass die "Pin Holes" mittig zu den zueinander beabstandeten Kavitäten 1.1, 1.2, 1.3 oder 2.1, 2.2 und 2.3 ausgerichtet sind. Vielmehr ist es für die Funktion der erfindungsgemäß verwendeten Verbundwalze 100 notwendig, dass die "Pin Holes" 200 bei Kontaktierung mit der Mantelfläche 30 nicht durch ein zwischen der Mantelfläche 30 und der Unterseite 300 der Folien- oder Verbundbahn angestautes Luftpolster zerstört werden. Insofern ist das Ausweichen bzw. Ausleiten oder die Aufnahme des eingezogenen Fluids, insbesondere der Luft, maßgeblich für die Funktion der Verbundwalze 100, was bereits auch schon bei der Überdeckung der "Pin Holes" 200 mit nur ein Kavität 1.1, 1.2, 1.3, 2.1, 2.2 oder 2.3 gegeben sein kann.

Figur 3 zeigt eine Schnittansicht einer Ausführungsform einer Verbundwalze 100.

## Patentansprüche

1. Verwendung einer Verbundwalze (100) als Teil einer Anlage zur kontinuierlichen Herstellung einer Folien- oder Verbundbahn (150) aus Papier-, Kunststoff- und Metalllagen, welche zumindest abschnittsweise Löcher (200) mit einer als Sperrschicht ausgestalteten Metalllage umfasst, in Form eines PLH-Mehrfachlaminats in Form von PLH-Produkten (Pin Hole Produkte) für den Lebensmittelbereich, wobei die Verbundwalze (100) zum Andrücken, Beschichten oder Kaschieren oder Laminieren der Folien- oder Verbundbahn (150) dient, und die Verbundwalze :
- einen metallenen Kern (50),
- und wenigstens einen zweischichtigen Walzenbezug (40) mit einer ersten Schicht (41), die in walzenaxialer Richtung (AA) und radial umlaufend an den metallenen Kern (50) anschließt, und mit einer zweiten Schicht (42), die in walzenaxialer Richtung (AA) und radial umlaufend auf der ersten Schicht (41) aufgebaut ist, und mit zumindest einer Mantelfläche (30), die im Betriebszustand die Folien- oder Verbundbahn (150) kontaktiert,
umfasst, und wobei zumindest abschnittsweise in walzenaxialer Richtung (AA) und zumindest abschnittsweise in Umlaufrichtung (R) der Verbundwalze (100) in der Mantelfläche (30) des Walzenbezugs (40) wenigstens eine Kavität (1.1, 1.2, 1.3, 2.1, 2.2, 2.3, 3.1, 3.2, 3.3, 4.1, 4.3) derart ausgestaltet ist, dass im Betriebszustand ein zwischen der Folien- oder Verbundbahn (150) und der Mantelfläche (30) geführtes Fluid von der Kavität (1.1, 1.2, 1.3, 2.1, 2.2, 2.3, 3.1, 3.2, 3.3, 4.1, 4.3) aufgenommen werden kann und/oder über die Kavität (1.1, 1.2, 1.3, 2.1, 2.2, 2.3, 3.1, 3.2, 3.3, 4.1, 4.3) abgeleitet werden kann,
wobei die Kavität (1.1, 1.2, 1.3, 2.1, 2.2, 2.3, 3.1, 3.2, 3.3, 4.1, 4.3) in Form von mehreren in Umlaufrichtung der Verbundwalze orientierten und zumindest in Umlaufrichtung zueinander beabstandeten Einzellöchern (3, 4) ausgebildet ist, wobei die Einzellöcher (3, 4) als Sacklöcher ausgestaltet sind, die in der Mantelfläche (30) des Walzenbezugs (40) angeordnet sind und sich von der Mantelfläche (30) über die erste Schicht (41) in die zweite Schicht (42) des Walzenbezuges (40) erstrecken, und wobei die Kavität (1.1, 1.2, 1.3, 2.1, 2.2, 2.3, 3.1, 3.2, 3.3, 4.1, 4.3) in Abschnitten der Mantelfläche (30) angeordnet ist, welche mit der Metalllage der Verbundbahn (150) in Form des PLH-Mehrfachlaminats kontaktieren, wobei das Fluid derart über die Kavität (1.1, 1.2, 1.3, 2.1, 2.2, 2.3, 3.1, 3.2, 3.3, 4.1, 4.3) abgeleitet wird, dass ein Durchdrücken der Metalllage durch sich zwischen der Mantelfläche (30) und der Verbundbahn (150) eingezogenes Fluid wirkungsvoll verhindert werden kann.

2. Verwendung der Verbundwalze (100) nach Anspruch 1, wobei die Kavität (1.1, 1.2, 1.3, 2.1, 2.2, 2.3, 3.1, 3.2, 3.3, 4.1, 4.3) der verwendeten Verbundwalze (100) eine variable radiale Tiefe und/oder variable axiale Weite aufweist.

3. Verwendung der Verbundwalze (100) nach Anspruch 1 oder 2, wobei die Kavität (1.1, 1.2, 1.3, 2.1, 2.2, 2.3, 3.1, 3.2, 3.3, 4.1, 4.3) der verwendeten Verbundwalze sich zumindest abschnittsweise in dem Walzenbezug (40) radial zu der walzenaxialen Mitte (60) der Verbundwalze (100) hin erstreckt.

4. Verwendung der Verbundwalze (100) nach einem der vorhergehenden Ansprüche, wobei die axiale Weite der Kavität (1.1, 1.2, 1.3, 2.1, 2.2, 2.3, 3.1, 3.2, 3.3, 4.1, 4.3) in dem Walzenbezug (40) der Verbundwalze (100) sich von der Mantelfläche (30) in Richtung zu der walzenaxialen Mitte (60) der Verbundwalze (100) verkleinert.

5. Verwendung der Verbundwalze (100) nach einem der vorhergehenden Ansprüche, wobei in walzenaxialer Richtung (AA) beabstandet zueinander zumindest zwei Kavitäten (1.1, 1.2, 1.3, 2.1, 2.2, 2.3, 3.1, 3.2, 3.3, 4.1, 4.3) und/oder (1.1, 1.2, 1.3, 2.1, 2.2, 2.3, 3.1, 3.2, 3.3, 4.1, 4.3) angeordnet sind.

6. Verwendung der Verbundwalze (100) nach einem der Ansprüche 1 bis 4 und 5, wobei die Einzellöcher (3, 4) der in Form von Einzellöchern (3, 4) ausgestalteten Kavität (1.1, 1.2, 1.3, 2.1, 2.2, 2.3, 3.1, 3.2, 3.3, 4.1, 4.3) der verwendeten Verbundwalze (100) zu zumindest den Einzellöchern (3, 4) einer in Form von Einzellöchern (3, 4) ausgestalteten zweiten Kavität (1.1, 1.2, 1.3, 2.1, 2.2, 2.3, 3.1, 3.2, 3.3, 4.1, 4.3) in Umlaufrichtung (R) versetzt zueinander angeordnet sind, wobei sich die Einzellöcher (3, 4) der in walzenaxialer Richtung (AA) zueinander beabstandeten Kavitäten (1.1, 1.2, 1.3, 2.1, 2.2, 2.3, 3.1, 3.2, 3.3, 4.1, 4.3) in Umlaufrichtung (R) zumindest abschnittsweise überschneiden.

7. Verwendung der Verbundwalze (100) nach einem der vorhergehenden Ansprüche, wobei der Walzenbezug (40) radial zu der walzenaxialen Mitte (60) der verwendeten Verbundwalze (100) und/oder in der walzenaxialen Richtung (AA) zumindest abschnittsweise aus einem Polymer ausgestaltet ist.

8. Verwendung der Verbundwalze (100) nach einem der vorhergehenden Ansprüche, wobei zumindest ein Abschnitt der Mantelfläche (30) der verwendeten Verbundwalze (100), in welchem die Kavität (1.1, 1.2, 1.3, 2.1, 2.2, 2.3, 3.1, 3.2, 3.3, 4.1, 4.3) ausgestaltet ist, aus einem Polymer ausgestaltet ist und/oder eine Oberflächenstruktur aus einem rauhen Material gebildet ist, wodurch das Aufnehmen des Fluids durch die Kavität (1.1, 1.2, 1.3, 2.1, 2.2, 2.3, 3.1, 3.2, 3.3, 4.1, 4.3) und/oder das Ableiten des Fluids über die Kavität (1.1, 1.2, 1.3, 2.1, 2.2, 2.3, 3.1, 3.2, 3.3, 4.1, 4.3) unterstützt werden kann.

9. Verwendung der Verbundwalze (100) nach einem der vorhergehenden Ansprüche, wobei zumindest in dem Abschnitt der Mantelfläche (30) der verwendeten Verbundwalze (100), in welchem die Kavität (1.1, 1.2, 1.3, 2.1, 2.2, 2.3, 3.1, 3.2, 3.3, 4.1, 4.3) ausgestaltet ist, eine zumindest abschnittweise in Umlaufrichtung (R) und/oder zumindest abschnittsweise in walzenaxialer Richtung (AA) laufende Nut (6) ausgebildet ist.

10. Verwendung der Verbundwalze (100) nach Anspruch 9, wobei die Nut (6) die Einzellöcher (3, 4) der in Form von Einzellöchern (3, 4) ausgestalteten Kavität (1.1, 1.2, 1.3, 2.1, 2.2, 2.3, 3.1, 3.2, 3.3, 4.1, 4.3) der verwendeten Verbundwalze (100) in Umlaufrichtung (R) miteinander verbindet und/oder die Nut (6) die Einzellöcher (3, 4) der in walzenaxialer Richtung (AA) beabstandet zueinander ausgestalteten Kavitäten (1.1, 1.2, 1.3, 2.1, 2.2, 2.3, 3.1, 3.2, 3.3, 4.1, 4.3) miteinander verbindet.

11. Verwendung der Verbundwalze (100) nach einem der vorhergehenden Ansprüche 1 bis 10 zum Andrücken, Beschichten oder Kaschieren oder Laminieren der Folien- oder Verbundbahn (150), die zumindest abschnittsweise Löcher (200) mit einer als Sperrschicht ausgestalteten Metalllage umfasst, **dadurch gekennzeichnet, dass** im Betriebszustand die in der Folien- oder Verbundbahn (150) ausgestalteten Löcher (200) zumindest mit einem Abschnitt der Mantelfläche (30) des Walzenbezuges (40) in Kontakt gebracht werden.

## Claims

1. Use of a composite roller (100) as part of a system for the continuous production of a film or composite web (150) of paper, plastic and metal layers, which at least in sections surrounds holes (200) with a metal layer designed as a barrier layer, in the form of a PLH multiple laminate in the form of PLH products (pin hole products) for the food sector, wherein the composite roller (100) is used for pressing on, coating or laminating or laminating the film or composite web (150), and the composite roller (100) is used for pressing on, coating or laminating the film or composite web (150), and the composite roller comprises:
- a metallic core (50),
- and at least one two-layer roll cover (40) with a first layer (41) which adjoins the metal core (50) in the roll-axial direction (AA) and radially circumferentially, and with a second layer (42) which is built up on the first layer (41) in the roll-axial direction (AA) and radially circumferentially, and with at least one shell surface (30) which contacts the film or composite web (150) in the operating state,
and wherein at least one cavity (1.1, 1.2, 1.3, 2.1, 2.2, 2.3, 3.1, 3.2, 3.3, 4.1, 4. 3) is designed in such a way that, in the operating state, a fluid guided between the foil or composite web (150) and the casing surface (30) is guided by the cavity (1.1, 1.2, 1. 3, 2.1, 2.2, 2.3, 3.1, 3.2, 3.3, 4.1, 4.3) and/or can be discharged via the cavity (1.1, 1.2, 1.3, 2.1, 2.2, 2.3, 3.1, 3.2, 3.3, 4.1, 4.3), wherein the cavity (1.1, 1.2, 1.3, 2.1, 2.2, 2.3, 3.1, 3.2, 3.3, 4.1, 4. 3) is designed in the form of a plurality of individual holes (3, 4) orientated in the direction of rotation of the composite roll and spaced apart from one another at least in the direction of rotation, the individual holes (3, 4) being designed as blind holes which are arranged in the circumferential surface (30) of the roll cover (40) and extend from the circumferential surface (30) via the first layer (41) into the second layer (42) of the roll cover (40), and wherein the cavity (1.1, 1.2, 1.3, 2.1, 2.2, 2.3, 3.1, 3.2, 3.3, 4.1, 4.3) is arranged in sections of the shell surface (30) which contact the metal layer of the composite web (150) in the form of the PLH multiple laminate, the fluid being diverted via the cavity (1. 1, 1.2, 1.3, 2.1, 2.2, 2.3, 3.1, 3.2, 3.3, 4.1, 4.3) in such a way that the metal layer can be effectively prevented from being pressed through by fluid drawn in between the outer surface (30) and the composite web (150).

2. Use of the composite roller (100) according to claim 1, wherein the cavity (1.1, 1.2, 1.3, 2.1, 2.2, 2.3, 3.1, 3.2, 3.3, 4.1, 4.3) of the composite roller (100) used has a variable radial depth and/or variable axial width.

3. Use of the composite roller (100) according to claim 1 or 2, wherein the cavity (1.1, 1.2, 1.3, 2.1, 2.2, 2.3, 3.1, 3.2, 3.3, 4.1, 4.3) of the composite roll used extends at least in sections in the roll cover (40) radially towards the roll-axial centre (60) of the composite roll (100).

4. Use of the composite roller (100) according to one of the preceding claims, wherein the cavity (1.1, 1.2, 1.3, 2.1, 2.2, 2.3, 3.1, 3.2, 3.3, 4.1, 4.3) of the composite roll used extends at least in sections in the roll cover (40) radially towards the roll-axial centre (60) of the composite roll (100).

5. Use of the composite roller (100) according to one of the preceding claims, wherein at least two cavities (1.1, 1.2, 1.3, 2.1, 2.2, 2.3, 3.1, 3.2, 3.3, 4.1, 4.3) and/or (1.1, 1.2, 1.3, 2.1, 2.2, 2.3, 3.1, 3.2, 3.3, 4.1, 4.3) are arranged at a distance from one another in the roll-axial direction (AA).

6. Use of the composite roller (100) according to one of the claims 1 to 4 and 5, wherein the individual holes (3, 4) of the cavity (1.1, 1.2, 1.3, 2.1, 2.2, 2.3, 3.1, 3.2, 3.3, 4.1, 4. 3) of the composite roller (100) used to at least the individual holes (3, 4) of a second cavity (1.1, 1.2, 1.3, 2.1, 2. 2, 2.3, 3.1, 3.2, 3.3, 4.1, 4.3) are arranged offset relative to one another in the direction of rotation (R), wherein the individual holes (3, 4) of the cavities (1.1, 1.2, 1.3, 2.1, 2.2, 2.3, 3.1, 3.2, 3.3, 4.1, 4.3) spaced apart from one another in the roll-axial direction (AA) overlap at least in sections in the direction of rotation (R).

7. Use of the composite roller (100) according to one of the preceding claims, wherein the roll cover (40) is formed radially to the roll-axial centre (60) of the composite roll (100) used and/or in the roll-axial direction (AA) at least in sections from a polymer.

8. Use of the composite roller (100) according to one of the preceding claims, wherein at least one section of the lateral surface (30) of the composite roll (100) used, in which the cavity (1.1, 1.2, 1.3, 2.1, 2.2, 2.3, 3.1, 3.2, 3.3, 4.1, 4.3) is formed, is made of a polymer and/or a surface structure is formed of a rough material, whereby the absorption of the fluid by the cavity (1.1, 1.2, 1.3, 2.1, 2.2, 2.3, 3.1, 3.2, 3.3, 4.1, 4.3) and/or the discharge of the fluid via the cavity (1.1, 1.2, 1.3, 2.1, 2.2, 2.3, 3.2, 3.3, 4.1, 4.3) is facilitated. 1, 1.2, 1.3, 2.1, 2.2, 2.3, 3.1, 3.2, 3.3, 4.1, 4.3) and/or the discharge of the fluid via the cavity (1.1, 1.2, 1.3, 2.1, 2.2, 2.3, 3.1, 3.2, 3.3, 4.1, 4.3) can be supported.

9. Use of the composite roller (100) according to one of the preceding claims, wherein a groove (6) running at least in sections in the direction of rotation (R) and/or at least in sections in the axial direction (AA) of the roll is formed at least in that section of the lateral surface (30) of the composite roll (100) used in which the cavity (1.1, 1.2, 1.3, 2.1, 2.2, 2.3, 3.1, 3.2, 3.3, 4.1, 4.3) is formed.

10. Use of the composite roller (100) according to claim 9, wherein the groove (6) connects the individual holes (3, 4) of the cavity (1.1, 1.2, 1.3, 2.1, 2.2, 2.3, 3.1, 3.2, 3.3, 4.1, 4. 3) of the composite roll (100) used are connected to one another in the direction of rotation (R) and/or the groove (6) connects the individual holes (3, 4) of the cavities (1.1, 1.2, 1.3, 2.1, 2.2, 2.3, 3.1, 3.2, 3.3, 3.3, 3.3, 4.1, 4.3), which are spaced apart from one another in the axial direction (AA) of the roll, to one another.

11. Use of the composite roller (100) according to one of the preceding claims 1 to 10 for pressing on, coating or laminating or laminating the film or composite web (150), which comprises holes (200) at least in sections with a metal layer formed as a barrier layer,
**characterised in that**
in the operating state the holes (200) formed in the film or composite web (150) are brought into contact with at least a section of the outer surface (30) of the roller cover (40).

## Revendications

1. Utilisation du rouleau composite (100) dans le cadre d'un système de production en continu d'un film ou d'une bande composite (150) de papier, de plastique et de couches métalliques, qui entoure, au moins en partie, les trous (200) d'une couche métallique conçue comme couche barrière, sous la forme d'un stratifié multiple PLH sous la forme de produits PLH (produits à trous d'épingle) pour le secteur de l'alimentation, dans lequel le rouleau composite (100) est utilisé pour presser, enduire ou laminer le film ou la bande composite (150), et le rouleau composite (100) est utilisé pour presser, enduire ou laminer le film ou la bande composite (150), et le rouleau composite comprend :
- une âme métallique (50),
- et au moins un revêtement de rouleau à deux couches (40) avec une première couche (41) qui jouxte le noyau métallique (50) dans la direction axiale du rouleau (AA) et dans la circonférence radiale, et avec une deuxième couche (42) qui est construite sur la première couche (41) dans la direction axiale du rouleau (AA) et dans la circonférence radiale, et avec au moins une surface d'enveloppe (30) qui entre en contact avec le film ou la bande composite (150) à l'état de fonctionnement,
et dans lequel au moins une cavité (1.1, 1.2, 1.3, 2.1, 2.2, 2.3, 3.1, 3.2, 3.3, 4.1, 4.3) est conçue de telle sorte que, à l'état de fonctionnement, un fluide guidé entre la feuille ou la bande composite (150) et la surface de l'enveloppe (30) est guidé par la cavité (1. 1, 1.2, 1.3, 2.1, 2.2, 2.3, 3.1, 3.2, 3.3, 4.1, 4.3) et/ou peut être évacué par la cavité (1.1, 1.2, 1.3, 2. 1, 2.2, 2.3, 3.1, 3.2, 3.3, 4.1, 4.3), dans laquelle la cavité (1.1, 1.2, 1.3, 2.1, 2.2, 2.3, 3.1, 3.2, 3.3, 4.1, 4. 3) est conçu sous la forme d'une pluralité de trous individuels (3, 4) orientés dans le sens de rotation du rouleau composite et espacés les uns des autres au moins dans le sens de rotation, les trous individuels (3, 4) étant conçus comme des trous borgnes disposés dans la surface circonférentielle (30) du couvercle du rouleau (40) et s'étendant de la surface circonférentielle (30) via la première couche (41) dans la deuxième couche (42) du couvercle du rouleau (40), et dans lequel la cavité (1. 1, 1.2, 1.3, 2.1, 2.2, 2.3, 3.1, 3.2, 3.3, 4.1, 4.3) est disposée dans les sections de la surface de l'enveloppe (30) qui sont en contact avec la couche métallique de la bande composite (150) sous la forme du stratifié multiple PLH, le fluide étant dévié par la cavité (1.1, 1.2, 1.3, 2.1, 2.2, 2.3, 3.1, 3.2, 3.3, 4.1, 4.3) de telle sorte que le fluide aspiré entre la surface extérieure (30) et la bande composite (150) puisse empêcher efficacement la pression sur la couche métallique.

2. Utilisation du rouleau composite (100) selon la revendication 1, dans lequel la cavité (1.1, 1.2, 1.3, 2.1, 2.2, 2.3, 3.1, 3.2, 3.3, 4.1, 4.3) du rouleau composite (100) utilisé a une profondeur radiale variable et/ou une largeur axiale variable.

3. Utilisation du rouleau composite (100) selon la revendication 1 ou 2, dans lequel la cavité (1.1, 1.2, 1.3, 2.1, 2.2, 2.3, 3.1, 3.2, 3.3, 4.1, 4.3) du rouleau composite utilisé s'étend au moins en sections dans le couvercle du rouleau (40) radialement vers le centre axial du rouleau (60) du rouleau composite (100).

4. Utilisation du rouleau composite (100) selon l'une des revendications précédentes, dans lequel la cavité (1.1, 1.2, 1.3, 2.1, 2.2, 2.3, 3.1, 3.2, 3.3, 4.1, 4.3) du rouleau composite utilisé s'étend au moins en sections dans le couvercle du rouleau (40) radialement vers le centre axial du rouleau (60) du rouleau composite (100).

5. Utilisation du rouleau composite (100) selon l'une des revendications précédentes, dans lequel au moins deux cavités (1.1, 1.2, 1.3, 2.1, 2.2, 2.3, 3.1, 3.2, 3.3, 4.1, 4.3) et/ou (1.1, 1.2, 1.3, 2.1, 2.2, 2.3, 3.1, 3.2, 3.3, 4.1, 4.3) sont éloignées l'une de l'autre dans la direction axiale du rouleau (AA).

6. Utilisation du rouleau composite (100) selon l'une des revendications 1 à 4 et 5, dans lequel les trous individuels (3, 4) de la cavité (1.1, 1.2, 1.3, 2.1, 2.2, 2.3, 3.1, 3.2, 3.3, 4.1, 4. 3) du rouleau composite (100) utilisés pour au moins les trous individuels (3, 4) d'une deuxième cavité (1.1, 1.2, 1.3, 2.1, 2. 2, 2.3, 3.1, 3.2, 3.3, 4.1, 4. 3) sont disposés de manière décalée les uns par rapport aux autres dans le sens de rotation (R), les trous individuels (3, 4) des cavités (1.1, 1.2, 1.3, 2.1, 2.2, 2.3, 3.1, 3.2, 3.3, 4.1, 4.3) espacés les uns des autres dans la direction axiale du rouleau (AA) se chevauchent au moins en partie dans le sens de rotation (R).

7. Utilisation du rouleau composite (100) selon l'une des revendications précédentes, dans lequel le couvercle du rouleau (40) est formé radialement au centre (60) du rouleau composite (100) utilisé et/ou dans la direction axiale du rouleau (AA), au moins en sections, à partir d'un polymère.

8. Utilisation du rouleau composite (100) selon l'une des revendications précédentes, dans lequel au moins une section de la surface latérale (30) du rouleau composite (100) utilisé, dans laquelle la cavité (1.1, 1.2, 1.3, 2.1, 2.2, 2.3, 3.1, 3.2, 3.3, 4.1, 4.3) est formée, est constituée d'un polymère et/ou une structure de surface est formée d'un matériau rugueux, de sorte que l'absorption du fluide par la cavité (1. 1, 1.2, 1.3, 2.1, 2.2, 2.3, 3.1, 3.2, 3.3, 4.1, 4.3) et/ou l'évacuation du fluide par la cavité (1.1, 1.2, 1.3, 2.1, 2.2, 2.3, 3.2, 3.3, 4.1, 4.3) est facilitée. 1, 1.2, 1.3, 2.1, 2.2, 2.3, 3.1, 3.2, 3.3, 4.1, 4.3) et/ou l'évacuation du fluide via la cavité (1.1, 1.2, 1.3, 2.1, 2.2, 2.3, 3.1, 3.2, 3.3, 4.1, 4.3) peut être favorisée.

9. Utilisation du rouleau composite (100) selon l'une des revendications précédentesdans, dans lequelle une rainure (6) s'étendant au moins en sections dans la direction de rotation (R) et/ou au moins en sections dans la direction axiale (AA) du rouleau est formée au moins dans la section de la surface latérale (30) du rouleau composite (100) utilisée dans laquelle la cavité (1.1, 1.2, 1.3, 2.1, 2.2, 2.3, 3.1, 3.2, 3.3, 4.1, 4.3) est formée.

10. Utilisation du rouleau composite (100) selon la revendication 9, dans lequel la rainure (6) relie les différents trous (3, 4) de la cavité (1.1, 1.2, 1.3, 2.1, 2.2, 2.3, 3.1, 3.2, 3.3, 4.1, 4.3) du rouleau composite (100) utilisé sont reliés l'un à l'autre dans le sens de rotation (R) et/ou la rainure (6) relie les différents trous (3, 4) des cavités (1. 1, 1.2, 1.3, 2.1, 2.2, 2.3, 3.1, 3.2, 3.3, 3.3, 3.3, 4.1, 4.3), qui sont espacés les uns des autres dans la direction axiale (AA) du rouleau.

11. Utilisation du rouleau composite (100) selon l'une des revendications précédentes 1 à 10 pour presser, enduire ou laminer le film ou la bande composite (150), qui comprend des trous (200) au moins en sections avec une couche métallique formée comme couche barrière,
**caractérisé par le fait que**
dans le stade de fonctionnement, les trous (200) formés dans le film ou la bande composite (150) sont mis en contact avec au moins une section de la surface extérieure (30) du couvercle du rouleau (40).
